# EUROPEAN PATENT SPECIFICATION

(11) **EP 0 964 885 B1**
(45) Date of publication and mention of the grant of the patent: **27.11.2002**
(21) Application number: 98908665.7
(22) Date of filing: 23.02.1998
(51) Int. Cl.: C08K 3/20, C08K 3/26, C08K 5/00, C08L 15/02

(54) **STABILIZATION OF HALOGENATED RUBBER**
STABILISIERUNG VON HALOGENIERTEM KAUTSCHUK
STABILISATION DE CAOUTCHOUC HALOGENE

(30) Priority: 06.03.1997 US 811795
(43) Date of publication of application: 22.12.1999
(73) Proprietor: ExxonMobil Chemical Patents Inc., Baytown, TX 77520-5200 (US)
(72) Inventor: YEH, Richard, Cheng-Ming, Bellaire, TX 77401 (US); CHUNG, David, Yen-Lun, Bellaire, TX 77401 (US); CHEE, Chia, Shian, Baton Rouge, LA 70816 (US)
(74) Representative: Veldhuizen, Albert Dirk Willem
(86) International application number: US9803500
(87) International publication number: WO98039380

(56) References cited:
- US-A- 4 130 519
- US-A- 4 159 261
- US-A- 4 513 116

## Description

### Field of the Invention

This invention relates to stabilizing halogenated rubbers such as halobutyl polymers and brominated isobutylene-p-methylstyrene copolymers, with a minor amount of a weak base.

### Background of the Invention

Halogenated rubbers are generally prepared by halogenating a rubbery polymer such as isobutylene-isoprene copolymer or isobutylene-p-methylstyrene copolymer in an organic solvent. This produces a halogenated polymer solution containing hydrogen halide as a byproduct. The halide is typically neutralized with an aqueous base and the resulting mixture is stripped to obtain a neutralized halogenated polymer in the form of a wet crumb, typically containing about 50 percent by weight water. The wet crumb is then dewatered in a dewatering extruder, press, mill, dryer or the like to obtain a dewatered crumb usually less than about 10 - 20 weight percent water. The dewatered crumb is then finished in an extruder or its equivalent with any other additives such as antioxidants, UV stabilizers or the like to obtain a relatively dry halogenated rubber product which is typically pressed into bales for storage and shipment.

In the case of the halobutyl polymers, these are known to undergo dehalogenation reactions under heat, during finishing or storage which can cause polymer degradation and discoloration. Typically, about 1-1.5 weight percent of an additive such as epoxidized soybean oil (ESBO) has been added to the halobutyl polymers during the finishing stage to prevent dehalogenation and discoloration during storage. However, ESBO is relatively expensive and tends to make the halobutyl polymers more tacky and lowers green strength.

Owing to the higher stability of the brominated isobutylene-p-methylstyrene copolymers available under the trade designation EXXPRO™, and the undesirability of additives such as ESBO, additives such as ESBO are typically not used in the EXXPRO™ polymers. However, there are occasionally noted instances of orange discoloration of the EXXPRO™ polymers, particularly at high bromine levels, for example, 2 weight percent bromine.

Accordingly, there remains a need to solve the discoloration of the EXXPRO™ polymers, and to find less expensive additives for the halobutyl polymers which do not affect the tackiness or green strength of the halobutyl polymers.

### Summary of the Invention

It has been found that halogenated rubber can be effectively stabilized with a small amount of a base, preferably a weak base, without adversely affecting the curability, tackiness or green strength of the halogenated rubber. By adding the base, preferably a weak base, during the finishing stage, a stabilized halogenated rubber can be obtained which is basically free from discoloration and has virtually no change in physical or vulcanizable characteristics.

In one aspect, the present invention provides an improvement in a method for making a halogenated rubber. The method includes the steps of halogenating a rubbery polymer in an organic solution to form a solution of halogenated rubber and hydrogen halide, neutralizing the hydrogen halide solution with an aqueous alkaline material, stripping the solvent from the neutralized solution to form a wet halogenated rubber crumb, dewatering the crumb to less than about 10 - 20 weight percent water, and finishing the crumb with one or more stabilizing additives to obtain a halogenated rubber product. The improvement is that the stabilizing additives in the finishing step include from 15 to 10,000 ppm of a weak metal base, preferably an alkali or alkaline earth metal base.

In another aspect, the present invention provides a dry, intimate admixture of halogenated rubber and a stabilizing amount less than 1 weight percent of a base.

In a further aspect, the present invention provides an intimate admixture of brominated isobutylene-p-methylstyrene copolymer and 15 to 10,000 ppm of a weak base comprising less than 0.3 weight percent water.

Another aspect of the invention is the provision of an intimate admixture of halogenated rubber and 15 to 10,000 ppm of a weak metal base.

### Detailed Description of the Invention

The halogenation of rubbery polymers is well known from, for example, U.S. Patents 4,384,072 to Newman et al.; 4,486,575 to Newman et al.; 4,501,859 to Newman et al.; 5,077,345 to Newman et al; 5,286,804 to Powers et al.; 5,087,674 to Gardner et al.; and 4,513,116 to Kowalski et al.; all of which are incorporated herein by reference. Particularly preferred halogenated rubbers according to the present invention include halobutyl rubbers and brominated isobutylene-p-methylstyrene copolymers.

The base which is added as a stabilizing additive is preferably a weak base, i.e. a base having pK greater than 1, preferably greater than 6. Weak metal bases such as alkali and alkaline earth metal hydroxides, bicarbonates and carbonates are especially preferred. Sodium bicarbonate is exemplary of the preferred weak alkali metal bases.

The base is used in an amount effective to stabilize the halogenated rubber, usually at least 15 ppm, preferably at least 50 ppm, and especially at least 100 ppm. To prevent discoloration of the halogenated rubbers, there is no particular upper limit of the amount of the base which may be used but it will generally be desirable to use 10,000 ppm or less to avoid adversely effecting the physical and chemical properties of the halogenated rubber such as curability, tackiness and green strength. Curable halogenated rubbers preferably contain less than 10,000 ppm of the base additive, more preferably less than 1,000 ppm, and especially less than 500 ppm. In a preferred embodiment, the stabilizing additive is sodium bicarbonate at a level of 100 - 500 ppm by weight of the halogenated rubber.

The weak base additive is added to the halogenated rubber in the usual manufacturing process after the halogenated rubber has been dewatered, preferably preferably to less than 20 percent water by weight, more preferably to less than 10 percent water by weight. The additive is added during the finishing operation in which the dewatered halogenated rubber is further dried to, for example, less than 0.3 weight percent water, in a finishing extruder, mill, dryer or the like.

The additive is generally added in the form of a concentrated solution, for example, a 10 weight percent aqueous sodium bicarbonate solution. The additive could be added in the form of a dry powder, but this is generally more difficult to meter into the polymer. The additive should be added to the polymer after it is dewatered to avoid removing the additive when the water is removed. Any water that is included in the additive solution is generally removed in the finishing extruder. Generally, the finished polymer contains less than 1 weight percent water, preferably less than 0.3 weight percent water. It is only necessary that the additive be intimately mixed with the polymer, and thus the stage in the finishing extruder at which the additive is introduced is not particularly critical.

The invention is illustrated by way of the following examples.

### Example 1. Effect of NaHCO₃ on Discolored EXXPRO™ Polymer

This example describes the initial discovery of the effect of NaHCO₃ (sodium bicarbonate) and other bases on discolored EXXPRO™ polymers. In this experiment, 40 grams of discolored (orange) EXXPRO™ polymer (***MDX*** 90-10) was milled in a Brabender mixer at around 180°C and 0.06 grams NaHCO₃ powder was added to the polymer melt and milling was continued for another 15 minutes. The polymer was then removed from the Brabender mixer and cooled to room temperature for inspection. It was observed that the orange discoloration was completely eliminated. Other bases like NaOH solution and DHT (magnesium aluminum hydroxycarbonate) were also found to be effective to eliminate the orange discoloration in EXXPRO™ polymer. Similar results were observed via mixing of 200-1000 ppm of NaHCO₃ and discolored EXXPRO™ polymer (***MDX*** 90-10) in a small laboratory Haake extruder at around 200°C. Both experiments indicated that addition of NaHCO₃ or other weak bases can eliminate the discoloration of EXXPRO™ polymers.

### Example 2. Adding 200 ppm NaHCO₃ to EXXPRO™ Polymer

This example describes the addition of 200 ppm NaHCO₃ into the EXXPRO™ polymer and the impact on polymer vulcanization. During the normal production of an EXXPRO™ polymer, namely ***MDX*** 93-5, which contains about 0.49 mole percent benzylic bromine (about 0.9 wt% bromine), solid NaHCO₃ powder was added via a solid feeder to the polymer crumbs at about 200 ppm, based on polymer feed rate, just before the polymer hopper of the drying extruder. The finished polymer was then compounded with a standard recipe (100 phr polymer, 40 phr IRB #6 carbon black, 2 phr stearic acid, 1 phr zinc oxide and 1 phr zinc stearate). The compounded polymer was tested side-by-side with the control sample without NaHCO₃ in a standard Monsanto Rheometer ODR 2000E (160°C, 60 minutes, 3° arc) to evaluate the effect of 200 ppm NaHCO₃ on cure. The abbreviations in the following tables are well known in the art and may be readily found in ASTM standards used by those of at least ordinary skill in the industry.

The abbreviations, as defined by ASTM standards in *Rubber Technology*, p. 149, (Chapman & Hall 1995), are as follows:
ML = minimum torque
MH = maximum torque
Ts2 = scorch time
T25 = time to cure 25%
T50 = time to cure 50%
T90 = time to cure 90%

The results are shown in the Table 1 below:

**TABLE 1**

| Sample (***MDX*** 93-5) | ML (dNm) | MH (dNm) | Ts2 (min) | T25 (min) | T50 (min) | T90 (min) |
|---|---|---|---|---|---|---|
| Control (No NaHCO₃) | 12.43 | 35.38 | 5.65 | 8.44 | 15.21 | 27.61 |
| 180 ppm NaHCO₃ | 12.13 | 34.82 | 6.07 | 8.76 | 16.32 | 29.10 |
| 220 ppm NaHCO₃ | 12.53 | 35.84 | 6.88 | 10.05 | 17.10 | 30.69 |

The data indicate that the presence of 200 PPM NaHCO₃ tends to slow down the cure rate of EXXPRO™ polymer slightly, but the impact on final cure state of EXXPRO™ polymer is insignificant. No discoloration was observed in the uncured EXXPRO™ polymer containing 200 ppm NaHCO₃ even after 18 months storage in the warehouse. This example confirms that the presence of 200 ppm level NaHCO₃ can effectively prevent the orange discoloration of EXXPRO™ polymer.

### Example 3. Adding 500 ppm NaHCO₃ to EXXPRO™ Polymer

A similar experiment was carried out as Example 2 except that *MDX* 90-10 EXXPRO™ polymer (contains 2 wt% bromine on polymer) was used and 500 ppm NaHCO₃ was added to the polymer crumbs instead of 200 ppm NaHCO₃ as in Example 2. Similar evaluation on the effect of NaHCO₃ on cure versus a control sample without NaHCO₃ addition was carried out using the same recipe and test conditions. The evaluation results are shown in Table 2 below

**TABLE 2**

| Sample *(****MDX*** 90-10) | ML (dNm) | MH (dNm) | Ts2 (min) | T25 (min) | T50 (min) | T90 (min) |
|---|---|---|---|---|---|---|
| Control (No NaHCO₃) | 18.29 | 90.08 | 2.55 | 5.01 | 5.82 | 10.75 |
| 500 ppm NaHCO₃ | 17.10 | 90.83 | 2.27 | 5.19 | 6.06 | 12.00 |

Again, the presence of 500 ppm NaHCO₃ has minimum impact on the cure rate and the final cure state of the EXXPRO™ polymer. No discoloration in the uncured polymer was observed even after 18 months of storage.

### Example 4. Adding 300 ppm DHT to EXXPRO™ Polymer

Another experiment was carried out via similar conditions as Example 2 except that about 300 ppm of a different weak base, namely DHT (magnesium aluminum hydroxycarbonate), was used. Similar evaluation on the impact of DHT on cure versus the control sample without DHT was carried out using the same recipe and test conditions. The evaluation results are shown in Table 3 below.

**TABLE 3**

| Sample (***MDX*** 93-5) | ML (dNm) | MH (dNm) | Ts2 (min) | T90 (min) |
|---|---|---|---|---|
| Control (No NaHCO₃) | 14.72 | 35.55 | 4.69 | 26.17 |
| 300 ppm NaHCO₃ | 15.12 | 35.02 | 5.52 | 26.46 |

Similar to NaHCO₃, the presence of 300 ppm level DHT tends to retard the cure rate of EXXPRO™ polymer with minimum impact on the final cure state of the EXXPRO™ polymer. Again, no discoloration in the uncured polymer was observed even after 18 months of storage

The invention is illustrated by way of the foregoing description which is intended to represent exemplary embodiments only, and not to limit the invention. Numerous changes and modifications will occur to those skilled in the art in view of the foregoing description. It is intended that all such variations and modifications within the scope and content of the appended claims be embraced thereby.

## Claims

1. A dry intimate admixture of isobutylene-co-methylstyrene halomethylstyrene and an anti-yellowing polymer stabilizer consisting essentially of a base present in the admixture in an amount of less than 1 weight percent.

2. The admixture of claim 1 comprising less than 1 weight percent water.

3. The admixture of claim 1 wherein the base comprises a weak alkali metal bicarbonate, or carbonate.

4. The admixture of claim 1 wherein the isobutylene polymer comprises isoburylene-co-methylstyrene-bromomethylstyrene terpolymer.

5. An intimate admixture of brominated isobutylene-p-methylstyrene copolymer and a stabilizer consisting essentially of 15 to 10,000 ppm of a weak base comprising less than 1 weight percent water.

6. The admixture of claim 5 wherein the weak base comprises 50 to 1,000 ppm alkali metal bicarbonate.

7. The admixture of claim 6 wherein the alkali metal bicarbonate is sodium bicarbonate.

8. The admixture of claim 7 comprising 100 to 500 ppm sodium bicarbonate.

9. In a method for making a halogenated isobutylene-co-methylstyrene polymer comprising the steps of halogenating isobutylene-co-methylstyrene polymer in an organic solution to form a solution of halogenated polymer and hydrogen halide, neutralizing the hydrogen halide solution with an aqueous alkaline material, stripping the solvent from the neutralized solution to form a wet halogenated rubber crumb, dewatering the crumb to less than 20 weight percent water, and finishing the crumb with one or more stabilizing additives to obtain a halogenated rubber product, the improvement wherein the stabilizing additives in the finishing step consists essentially of from 15 to 10,000 ppm of a weak metal base.

10. The improvement of claim 9 wherein the stabilizing additives comprises 50 to 1,000 ppm weak alkali metal bicarbonate or carbonate.

11. The improvement of claim 10 wherein the stabilizing additives comprise 100 to 500 ppm of the weak alkali metal bicarbonate or carbonate.

12. The improvement of claim 11 wherein the stabilizing additive is sodium bicarbonate.

13. The improvement of claim 9 wherein the weak metal base is added in the finishing step as a concentrated aqueous solution.

14. The improvement of claim 12 wherein the polymer comprises isoburylene-bromomethylstyrene copolymer.

15. A dry intimate admixture of isobutylene-co-methylstyrene-halomethylstyrene polymer and sodium bicarbonate wherein the sodium bicarbonate is present in said admixture in an amount of less than 1 weight percent.

## Patentansprüche

1. Trockene innige Mischung von Isobutylen-Co-Methylstyrol-Halogenmethylstyrol und gegen Vergilbung wirkendem Polymerstabilisator, der im wesentlichen aus Base besteht, die in der Mischung in einer Menge von weniger als 1 Gew.% vorhanden ist.

2. Mischung nach Anspruch 1, die weniger als 1 Gew.% Wasser umfasst.

3. Mischung nach Anspruch 1, bei der die Base schwaches Alkalimetallbicarbonat oder -carbonat umfasst.

4. Mischung nach Anspruch 1, bei der das Isobutylenpolymer Isobutylen-Co-Methylstyrol-Brommethylstyrol-Terpolymer umfasst.

5. Innige Mischung aus bromiertem Isobutylen-p-Methylstyrol-Copolymer und im Wesentlichen aus 15 bis 10 000 ppm schwacher Base bestehendem Stabilisator, die weniger als 1 Gew.% Wasser umfasst.

6. Mischung nach Anspruch 5, bei der die schwache Base 50 bis 1000 ppm Alkalimetallbicarbonat umfasst.

7. Mischung nach Anspruch 6, bei der das Alkalimetallbicarbonat Natriumbicarbonat ist.

8. Mischung nach Anspruch 7, die 100 bis 500 ppm Natriumbicarbonat umfasst.

9. Verfahren zur Herstellung von halogeniertem Isobutylen-Co-Methylstyrol-Polymer, bei dem schrittweise Isobutylen-Co-Methylstyrol-Polymer in organischer Lösung unter Bildung von Lösung von halogeniertem Polymer und Halogenwasserstoff halogeniert wird, die Halogenwasserstofflösung mit wässrigem alkalischem Material neutralisiert wird, das Lösungsmittel von der neutralisierten Lösung gestrippt wird, um feuchte halogenierte Kautschukkrümel zu bilden, die Krümel auf weniger als 20 Gew.% Wasser entwässert werden und die Krümel mit einem oder mehreren Stabilisierungsadditiven endbehandelt werden, um halogeniertes Kautschukprodukt zu erhalten, wobei die Verbesserung darin besteht, dass die Stabilisierungsadditive in der Endbehandlungsstufe im Wesentlichen aus 15 bis 10 000 ppm schwacher Metallbase bestehen.

10. Verbesserung nach Anspruch 9, bei der die Stabilisierungsadditive 50 bis 1000 ppm schwaches Alkalimetallbicarbonat oder -carbonat umfassen.

11. Verbesserung nach Anspruch 10, bei der die Stabilisierungsadditive 100 bis 500 ppm des schwachen Alkalimetallbicarbonats oder -carbonats umfassen.

12. Verbesserung nach Anspruch 11, bei der das stabilisierende Additiv Natriumbicarbonat ist.

13. Verbesserung nach Anspruch 9, bei der die schwache Metallbase in der Endbehandlungsstufe als konzentrierte wässrige Lösung zugegeben wird.

14. Verbesserung nach Anspruch 12, bei der das Polymer Isobutylen-Brommethylstyrol-Copolymer umfasst.

15. Trockene innige Mischung aus Isobutylen-Co-Methylstyrol-Halogenmethylstyrolpolymer und Natriumbicarbonat, bei der das Natriumbicarbonat in der Mischung in einer Menge von weniger als 1 Gew.% vorhanden ist.

## Revendications

1. Mélange intime sec d'isobutylène-co-méthylstyrène-halogénométhylstyrène et d'un stabilisant anti-jaunissement de polymère consistant essentiellement en une base, présent dans le mélange en une quantité inférieure à 1 % en poids.

2. Mélange suivant la revendication 1, comprenant moins de 1 % en poids d'eau.

3. Mélange suivant la revendication 1, dans lequel la base comprend un bicarbonate ou carbonate de métal alcalin faible.

4. Mélange suivant la revendication 1, dans lequel le polymère d'isobutylène comprend un terpolymère isobutylène-co-méthylstyrène-bromométhylstyrène.

5. Mélange intime d'un copolymère isobutylène-p-méthylstyrène bromé et d'un stabilisant consistant essentiellement en une quantité de 15 à 10 000 ppm d'une base faible comprenant moins de 1 % en poids d'eau.

6. Mélange suivant la revendication 5, dans lequel la base faible comprend 50 à 1000 ppm d'un bicarbonate de métal alcalin.

7. Mélange suivant la revendication 6, dans lequel le bicarbonate de métal alcalin est le bicarbonate de sodium.

8. Mélange suivant la revendication 7, comprenant 100 à 500 ppm de bicarbonate de sodium.

9. Dans un procédé pour la préparation d'un polymère isobutylène-co-méthylstyrène halogéné comprenant les étapes consistant à halogéner un polymère isobutylène-co-méthylstyrène dans une solution organique pour former une solution de polymère halogéné et d'un halogénure d'hydrogène, à neutraliser la solution d'un halogénure d'hydrogène avec une matière alcaline aqueuse, à éliminer par entraînement le solvant de la solution neutralisée pour former des particules de caoutchouc halogéné humide, à éliminer l'eau des particules jusqu'à une teneur en eau inférieure à 20 % en poids, et à soumettre les particules à un finissage avec un ou plusieurs additifs stabilisants pour obtenir un produit consistant en un caoutchouc halogéné, perfectionnement dans lequel les additifs stabilisants dans l'étape de finissage consistent essentiellement en une quantité de 15 à 10 000 ppm d'une base métallique faible.

10. Perfectionnement suivant la revendication 9, dans lequel les additifs stabilisants comprennent 50 à 1000 ppm d'un bicarbonate ou carbonate de métal alcalin faible.

11. Perfectionnement suivant la revendication 10, dans lequel les additifs stabilisants comprennent 100 à 500 ppm du bicarbonate ou carbonate de métal alcalin faible.

12. Perfectionnement suivant la revendication 11, dans lequel l'additif stabilisant est le bicarbonate de sodium.

13. Perfectionnement suivant la revendication 9, dans lequel la base métallique faible est ajoutée dans l'étape de finissage sous forme d'une solution aqueuse concentrée.

14. Perfectionnement suivant la revendication 12, dans lequel le polymère comprend un copolymère isobutylène-bromométhylstyrène.

15. Mélange intime sec d'un polymère isobutylène-co-méthylstyrène-halogénométhylstyrène et de bicarbonate de sodium, dans lequel le bicarbonate de sodium est présent dans ledit mélange en une quantité inférieure à 1 % en poids.
